# EUROPEAN PATENT SPECIFICATION

(11) **EP 1 230 971 B1**
(45) Date of publication and mention of the grant of the patent: **11.05.2005**
(21) Application number: 01103240.6
(22) Date of filing: 12.02.2001
(51) Int. Cl.: B01D 69/12, B01D 71/56, B01D 67/00

(54) **Composite polyamide reverse osmosis membrane and method for producing the same**
Zusammengesetzte Polyamid-Umkehrosmosemembran und Verfahren zu ihrer Herstellung
Membrane composite en polyamide pour l'osmose inverse et son procédé de fabrication

(43) Date of publication of application: 14.08.2002
(73) Proprietor: SAEHAN INDUSTRIES, INC., Kyongsangbuk-Do (KR)
(72) Inventor: Koo, Ja Young, Acton, CA 01718 (US); Kim, Jong Eun, Yongin-si, Kyunggi-do (KR); Kim, Wan Joo, Daejun-si (KR); Park, Kee Seop, Kyungsan-si, Kyungsangbuk-do (KR)
(74) Representative: Becker Kurig Straus

(56) References cited:
- EP-A- 0 014 054
- EP-A- 0 316 525
- EP-A- 0 798 036
- GB-A- 2 352 722
- US-A- 6 015 495
- US-A- 6 063 278

## Description

### BACKGROUND OF THE INVENTION

### 1. Field of the invention

The present invention relates, in general, to a novel composite reverse osmosis membrane suitable for industrial, agricultural or home use and a method for producing the same.

### 2. Description of the Prior Art

It is known that dissolved substances can be separated from their solvents by use of various types of selective membranes, examples of such membranes including microfiltration membranes, ultrafiltration membranes and reverse osmosis membranes. One use to which reverse osmosis membranes have previously been put is in the desalination of brackish water or seawater to provide large volumes of water suitable for industrial and home use. What is involved in the desalination of brackish water or seawater using reverse osmosis membranes is literally a filtering out of salts and other dissolved ions or molecules from the salty water by forcing the salty water through a reverse osmosis membrane whereby purified water passes through the membrane while salts and other dissolved ions and molecules do not pass through the membrane. Osmotic pressure works against the reverse osmosis process, and the more concentrated the feed water, the greater the osmotic pressure which must be overcome. A reverse osmosis membrane, in order to be commercially useful in desalinating brackish water or seawater on a large scale, must possess certain properties. One such property is that the membranes have a high salt rejection coefficient. In fact, for the desalinated water to be suitable for many commercial applications, the reverse osmosis membrane should have a salt rejection capability of at least 97 %. Another important property of a reverse osmosis membrane is that the membranes possess a high flux characteristic, i.e., the ability to pass a relatively large amount of water through the membrane at relatively low pressures. Typically, the flux for the membrane should be greater than 0.414 m³/m²d (10 gallon/ft²-day (gfd)) at a pressure of 800 psi for seawater and should be greater than 0.621m³/m²d (15 gfd) at a pressure of 1518 Pa (220 psi) for brackish water. For certain applications, a rejection-rate that is less than that which would otherwise be desirable may be acceptable in exchange for higher flux and vice versa.

One common type of reverse osmosis membrane is a composite membrane comprising a porous support and a thin polyamide film formed on the porous support. Typical polyamide film may be formed by an interfacial polymerization of a polyfunctional amine and a polyfunctional acyl halide.

U.S. Pat. No. 4,277,344 granted to Cadotte discloses a technique for preparing an aromatic polyamide film by interfacial-polymerization of two primary amine substituents-containing aromatic polyfunctional amines with at least three acyl halide functional groups-containing aromatic acyl halides. In the preferred embodiment, a porous polysulfone support is coated with m-phenylenediamine in water. After removal of excess m-phenylenediamine solution from the coated support, the coated support is covered with a solution of trimesoyl chloride (TMC) dissolved in FREON (trichlorotrifluoroethane). The contact time for the interfacial reaction is 10 seconds, and the reaction is substantially complete in 1 second. Although the Cadotte membrane as described above exhibits excellent flux and salt rejection, various approaches have been taken to further improve the flux and salt rejection of composite polyamide reverse osmosis membranes. In addition, other approaches have been taken to improve the resistance of said membranes to chemical degradation and the like. Many of these approaches have involved the use of various types of additives to the solutions used in the interfacial polymerization.

For example, in U.S. Pat. No. 4,872,984 granted to Tomashke issued in October, 1989, there is disclosed an aromatic polyamide membrane formed by (a) coating a microporous support with an aqueous solution comprising an essentially aromatic polyfunctional polyamine having at least two amine functional groups and an amine salt to form a liquid layer on the microporous support, (b) contacting the liquid layer with an organic solvent solution of an aromatic amine-reactive reactant comprising a polyfunctional acyl halide or mixture thereof, wherein the amine-reactive reactant has, on the average, at least about 2.2 acyl halide groups per reactant molecule, and (c) drying the product in an oven at 60-110 °C for 1-10 minutes, so as to form a water permeable membrane.

The amine salt of Tomashke is a water soluble salt of a strong acid and a tertiary amine selected from the group consisting of trialkylamines, such as trimethylamine, triethylamine, tripropylamine; N-alkylcycloaliphatic amines, such as 1-methylpiperidine; N,N-dialkaneamines, such as N,N-dimethylethylamine and N,N-diethylmethylamine; N,N-dialkylethanolamines, such as N,N-dimethylethanolamine; bicyclic tertiary amines, such as 3-quinuclidinol; and mixtures thereof, or a quaternary amine selected from at least one member of the group consisting of tetraalkylammonium hydroxides, such as tetramethylammonium hydroxide, tetraethylammonium hydroxide and tetrapropylammonium hydroxide; benzyltrialkylammonium hydroxides, such as benzyltrimethylammonium hydroxide, benzyltriethylammonium hydroxide and benzyltriproprylammonium hydroxide; and mixtures thereof.

In U.S. Pat. No. 4,983,291 to Chau et al., there is disclosed a membrane which comprises an interfacial-polymerized product on a porous support. According to this patent, said membrane may be prepared by contacting a porous support with an aqueous solution of a polyamine which may, if so desired, contain a polar aprotic solvent not reactive with the amines, a polyhydric compound and an acid acceptor. The polyhydric compound, which may include ethylene glycol, propylene glycol, glycerin and other longer carbon atom backbone glycols, may be present in the aqueous solution in an amount ranging from 0.1-50 %. The surface of the coated support is freed of excess solution and thereafter contacted with an organic solution of a polyacyl halide for a period of time sufficient to form a polymerized reaction product on the support material. The resulting composite is then treated with a hydroxypolycarboxylic acid, polyaminoalkylene polycarboxylic acid, amine salts of acids, sulfuric acid, aminoic acid, aminoic acid salt, polymeric acid and organic acid, before drying of the reverse osmosis membrane.

In U.S. Pat. No. 5,576,057 to Hirose et al., there is disclosed a composite reverse osmosis membrane comprising a polyamide type skin layer on a porous support, said membrane being formed by coating a solution A containing a compound having at least two reactive amino groups on the porous support and, thereafter, contacting a solution B containing a polyfunctional acid halide with the coated layer of solution A, wherein the difference between a solubility parameter of solution A and a solubility parameter of solution B is 7-15 (cal/cm³)^{1/2}. Examples of the solvent for solution A are a mixed solvent of water and an alcohol such as ethanol, propanol, butanol, 1-pentanol, t-amyl alcohol, isoamyl alcohol, isobutyl alcohol, isopropyl alcohol, undecanol, 2-thylbutanol, 2-ethylhexanol, octanol, cyclohexanol, tetrahydrofurfuryl alcohol, neopentyl glycol, t-butanol, benzyl alcohol, 4-methyl-2-pentanol, 3-methyl-2-butanol, pentyl alcohol, allyl alcohol, ethylene glycol, and diethylene glycol etc.; and a mixed solvent of water and a nitrogen compound such as nitromethane, formamide, methylformamide, acetonitrile, dimethylformamide, ethylformamide, etc. As an example of the mixing ratio of water and the other solvent of solution A, Hirose et al states that the mixing ratio of water/ethanol can be selected in the range of 60-90/40-10.

In U.S. Pat. No. 5,614,099 to Hirose et al., there is disclosed a composite reverse osmosis membrane having a polyamide type skin layer whose average surface roughness is at least 55 nm. The polyamide type skin layer comprises the reaction product of a compound having amino groups and a polyfunctional acid halide compound having acid halide groups. A polymer film may be formed by contacting a solution containing, for example, m-phenylenediamine with a porous polysulfone supporting film so as to form a layer of the solution on the supporting film, then contacting the film with a solution of trimesoyl chloride and holding the film in a hot air dryer so that a polymer film is formed on the supporting film, the surface of the polyamide type skin layer can also be treated with quaternary ammonium salt and coated with a cross-linked layer of an organic polymer having positively charged groups.

Meanwhile, U.S. Pat. No. 6,063,278 to Ja-Young, Koo who is an inventor of the present invention, relates to a composite polyamide membrane having high salt rejection and flux that is the reaction product of (i) polyfunctional amine and (ii) an amine-reactive reactant selected from the group consisting of a polyfunctional acyl halide, a polyfunctional sulfonyl halide and a polyfunctional isocyanate (iii) in the presence of a salt of polyfunctional tertiary amines and acids under low pressure, wherein said acids and said polyfunctional tertiary amines are reacted together in a molar ratio that is greater than or equal to 1:1, respectively.

Furthermore, GB 2 352 722 A to Ja-young Koo who is an inventor of the present invention, describes a composite polyamide membrane that is a reaction product of (i) an aqueous solution comprising a polyfunctional amine, a salt-containing compound and one or more polar solvents and (ii) an organic solvent solution comprising an amine reactive reactant selected from the group consisting of a polyfunctional acyl halide, a polyfunctional sulfonyl halide and a polyfunctional isocyanate, wherein said salt-containing compound is a reaction product of a strong acid and a tertiary amine. Said tertiary amine can be either monofunctional tertiary amine or polyfunctional tertiary amine. Said strong acid can react with said polyfunctional tertiary amine in a molar ratio that is greater than or equal to 1: 1.

In EP 0.014 054, there is disclosed process for the production of a reverse osmosis membrane, wherein a porous support is coated with a layer comprising an aqueous solution containing a monomeric polyfunctional secondary amine and being coated with a polyfunctional acid halide for crosslinking reactions between the secondary amine and the acyl halide. The product obtained is dried to form the composite reverse osmosis membrane. Further, the aqueous solution can contain an acid receptor like sodium hydroxide and N,N'-dimethylpiperazine to facilitate the polymerization reaction.

EP 0 316 525 A2 describes a composite polyamide membrane which is made using a cationic wetting agent and a aqueous solution containing a polyfunctional amine reactant which is interfacially polymerized with an acyl halide to form a layer on a support. Further, the aqueous solution can contain an acid receptor like sodium hydroxide and N,N'-dimethylpiperazine to facilitate the polymerization reaction.

US 6,015,495 describes a composite polyamide reverse osmosis membrane which is made by coating a support with an aqueous solution containing a polyfunctional amine and a mixed solvent, by dipping then the coated substrate in an organic solvent solution comprising an amine-reactive reactant, drying it and then rinsing it in a basic aqueous solution.

EP 0 798 036 A2 discloses a composite reverse osmosis membrane which is made by adding alcohols or ethers to a solution containing at least one compound selected from the group consisting of a compound having two or more polyfunctional amino groups and a polyfunctional acid halide having two or more reactive acid halide groups and a polyfunctional acid halide.

### SUMMARY OF THE INVENTION

Therefore, it is an object of the present invention to overcome the above problems encountered in the prior arts and to provide a composite polyamide reverse osmosis membrane having high salt rejection and flux.

It is another object of the present invention to provide a method for producing a composite polyamide reverse osmosis membrane having high salt-rejection rate and high flux by adding an acid and a polyfunctional amine in a molar ratio that is less than 1: 1, after taking account of the fact that an acid and a polyfunctional amine is added in a molar ratio that is greater than or equal to 1:1, as disclosed in U.S. Pat. No. 6,063,278 and GB 2 352 722 A, both yielded to the present inventors. Although GB 2 352 722 A disclosed examples ofusing an acid and 1,2-dimethylimidazole (DMI), and an acid and N, N, N', N' - tetramethylethylenediamine (TMED), respectively in a molar ratio less than 1: 1, DMI and TMED are not used in the present invention. Moreover, the present invention employs different polyfunctional tertiary amines that provide higher flux and higher salt rejection than DMI and TMED.

In accordance with one embodiment of the present invention, there is provided a composite polyamide reverse osmosis membrane as claimed in claims 1 or 2, comprising an interfacial-polymerization product of (i) an aqueous polyfunctional amine solution and (ii) an organic solvent solution comprising an amine-reactive reactant selected from the group consisting of a polyfunctional acyl halide, a polyfunctional sulfonyl halide and a polyfunctional isocyanate, on a porous support, said aqueous solution further comprising an additional substance selected from the group consisting of a polyfunctional tertiary amine alone, a mixture of a polyfunctional tertiary amine salt and a free polyfunctional tertiary amine, a polar solvent and a polyfunctional tertiary amine, and a mixture of a polar solvent, a polyfunctional tertiary amine salt and a free polyfunctional tertiary amine, said mixture of the polyfunctional tertiary amine salt and the free polyfunctional tertiary amine resulting from the reaction of acid and polyfunctional tertiary amine in a molar ratio that is greater than 0:1 and less than 1:1.

In accordance with another embodiment of the present invention, there is provided a method for producing a composite polyamide reverse osmosis membrane as claimed in claims 12 or 13, comprising the following steps of: coating a porous support with an aqueous polyfunctional amine solution; and contacting the coated support with an amine-reactive reactant-containing organic solvent solution to interfacially polymerize said polyfunctional amine with said amine-reactive reactant, thereby forming a polyamide layer on said porous support.

### DETAILED DESCRIPTION OF THE INVENTION

The porous support used in the present invention is a microporous support formed of a general polymeric material containing pore sizes which are of sufficient size to permit the passage of permeate therethrough but not large enough so as to interfere with the bridging over of the ultrathin membrane formed thereon. The pore size of the support will generally range from 1 to 500 nanometers inasmuch as pores which are larger in diameter than 500 nanometers will permit the ultrathin film to sag into the pores, thus disrupting the flat sheet configuration desired. Examples of microporous supports useful in the present invention include those made of a polysulfone, a polyether, a polyimide, a polyamide, polypropylene and various halogenated polymers, such as polyvinylidene fluoride.

The thickness of the microporous support is not critical to the present invention, however, generally, it is about 25-125 µm (more preferably, 40-75 µm).

The polyfunctional amine reactant employed in interfacial polymerization of the present invention is preferably an essentially monomeric amine having at least two amine functional groups. The amine functional group is typically a primary or secondary amine functional group.

Examples of suitable polyamines include meta-phenylenediamine and para-phenylenediamine, and substituted derivatives thereof, wherein the substituent includes, e.g., an alkyl group, such as a methyl group or an ethyl group, an alkoxy group, such as a methoxy group or an ethoxy group, a hydroxy alkyl group, a hydroxy group or a halogen atom. Additional examples of suitable polyamines include alkanediamines, such as 1,3-propanediamine, cycloaliphatic primary diamines, such as cyclohexane diamine, cycloaliphatic secondary diamines, such as piperazine or its derivatives, aromatic secondary amines, such as N,N'-dimethyl-1,3-phenylenediamine, N,N'-diphenylethylene diamine, benzidine, xylyene diamine and derivatives thereof. Of them, the preferred polyamines are aromatic primary diamines, more preferably metaphenylenediamine.

The polyfuncticnal amine is present in an aqueous solution in an amount constituting about 0.1-20 wt% (more preferably, 0.5-8.0 wt%), of the aqueous solution, and the pH of the aqueous solution ranges 7 to 13. The pH can be adjusted by the addition of an alkaline acid acceptor in an amount ranging from 0.001 to 5 wt%, of the solution. Examples of the acid acceptor include hydroxides, carboxylates, carbonates, borates, and phosphates of alkali metals, as well as trialkylamines.

As noted above, in addition to the polyfunctional amine, the aqueous solution further comprises a polyfunctional tertiary amine or a polyfunctional tertiary amine salt resulted from the reaction of a polyfunctional tertiary amine with an acid or a polyfunctional tertiary amine with an acid anhydride. The addition of such polyfunctional tertiary amine or its salt to the aqueous solution results in a flux increase of the resultant membrane. At that time, the salt of polyfunctional tertiary amine may be added after the polyfunctional tertiary amine is mixed with the acid (or acid anhydride), or separately added to the aqueous solution.

Examples of the first class of polyfunctional tertiary amine useful in the present invention include, but are not limited to, N,N,N'N'-tetramethyl-1,6-hexanediamine, N,N,N'N'-tetramethyl-1,4-butanediamine, N,N,N'N'-tetramethyl-2-butene-1,4-diamine, N,N,N'N'-tetramethyl-1,3-butanediamine, N,N,N'N'-tetramethyl-1,3-propanediamine, N,N,N'N'-tetramethyl-1,8-octanediamine, N,N,N'N'-tetramethyl-1,7-heptanediamine, N,N,N'N'-tetramethyl-1,5-pentanediamine, N,N,N'N'-tetraethyl-1,4-butanediamine, N,N,N'N'-tetraethyl-1,3-butanediamine, N,N,N'N'-tetraethyl-1,3-propanediamine, N,N,N'N'-tetraethylethylenediamine; with N,N,N'N'-tetramethyl-1,6-hexanediamine, N,N,N'N'-tetramethyl-1,3-butanediamine, N,N,N'N'-tetramethyl-1,3-propanediamine being preferred and N,N,N'N'-tetramethyl-1,6-hexanediamine being more preferred.

Examples of the second class of polyfunctional tertiary amine include, but are not limited to, N,N,N'N'-tetramethyl-1,n-cyclohexanediamine (wherein n is 2-4), and N,N,N'N'-tetramethyl-1,n-cyclohexanebis(methylamine) (wherein n is 2-4).

Such polyfunctional tertiary amine is preferably present in the aqueous solution in an amount constituting about 0.05-6 wt% (more preferably, 0.1-3 wt%), of the aqueous solution. Additionally, the polyfunctional amine and the polyfunctional tertiary amine are present in the aqueous solution in a weight ratio range of about 1.5:1-10:1.

The salt of the polyfunctional tertiary amine is obtained by reacting the polyfunctional tertiary amine with an acid (or acid anhydride). Examples of acids suitable for use in the present invention include aromatic sulfonic acid, aliphatic sulfonic acid, cycloaliphatic sulfonic acid, sulfuric acid, trifluoroacetic acid, nitric acid, hydrochloric acid, phosphoric acid, alkyl phosphoric acid, aryl phosphoric acid, carboxylic acid and mixtures thereof. The acid anhydride is exemplified by acetic anhydride, propionic anhydride, butyric anhydride, hexanoic anhydride, benzoic anhydride, sulfonic anhydride and mixtures thereof.

In the present invention, when the acid and polyfunctional tertiary amine are simultaneously used as additives, their molar ratio is greater than 0:1 and less than 1:1. More preferably, the molar ratio is greater than 0:1 and less than 0.9:1. Also, when the acid anhydride and the polyfunctional tertiary amine are simultaneously used as additives, their molar ratio is greater than 0:1 and less than 1:1. However, the molar ratio greater than 0:1 and less than 0.5:1 results in excellent addition effects.

The polyfunctional tertiary amine salt in aqueous solution has contents of preferably 0.1-12 wt%, more preferably 0.1-9 wt%.

In addition to the polyfunctional tertiary amine and/or the polyfunctional tertiary amine salt, the aqueous polyfunctional amine solution further comprises, one or more polar solvents being selected from the group consisting of ethylene glycol derivatives, propylene glycol derivatives, 1,3-propanediol derivatives, sulfoxide derivatives, sulfone derivatives, nitrile derivatives, ketone derivatives, urea derivatives, and mixtures thereof. As will be seen below, the addition of the polar solvents to the solution results in a flux increase of the resultant membrane.

Examples of ethylene glycol derivatives suitable for use in the present invention include, but are not limited to, 2-methoxyethanol, 2-ethoxyethanol, 2-propoxyethanol, 2-butoxyethanol, di(ethyleneglycol)-t-butylmethyl ether, di(ethyleneglycol)hexyl ether, (2-methoxy ethyl)ether, (2-ethoxyethyl)ether and so on. Examples of 1,3-propane diol derivatives include, but are not limited to, 1,3-heptanediol, 2-ethyl-1,3-hexanediol, 1,3-hexanediol and 1,3-pentanediol.

Examples of sulfoxide derivatives useful in the present invention include, but are not limited to, dimethyl sulfoxide, tetramethylene sulfoxide, butyl sulfoxide and methylphenyl sulfoxide. The sulfone derivatives are exemplified by dimethylsulfone, tetramethylene sulfone, butyl sulfone and so on.

Nitrile derivatives are preferably selected from the group consisting of acetonitrile and propionitrile. Examples of urea derivatives include 1,3-dimethyl-2-imidazolidinone, and ketone derivatives include acetone, 2-butanone, 2-hexanone, 3-hexanone, 3-pentanone, cyclohexanone, and cyclopentanone.

The one or more polar solvents in the aqueous solution preferably constitute total amounts of about 0.01-8 wt% of the aqueous solution.

Where an alkoxyethanol is used as a polar solvent, it preferably constitutes about 0.04-4.0 wt% of the aqueous solution. Where 1-pentanediol is used as a polar solvent, it preferably constitutes about 0.01-1.0 wt% of the aqueous solution. Where a butyl sulfoxide is used as a polar solvent, it preferably constitutes about 0.01-1.0 wt% of the aqueous solution. Where a methylphenyl sulfoxide is used as a polar solvent, it preferably constitutes about 0.01-1.0 wt% of the aqueous solution. Where a butyl sulfone is used as a polar solvent, it preferably constitutes about 0.01-1.0 wt% of the aqueous solution. Where a ketone derivative is used as a polar solvent, it preferably constitutes about 0.01-4.0 wt% of the aqueous solution.

In simultaneous addition manner, the support is coated with such polar solvents, along with the polyfunctional tertiary amine alone or the mixture of polyfunctional tertiary amine salt and free polyfunctional tertiary amine, added to the aqueous polyfunctional amine solution. In a sequential addition manner, the support is coated with only polar solvent-added aqueous polyfunctional amine solution (1) and then with aqueous polyfunctional amine solution (1) comprising the polyfunctional tertiary amine alone or the mixture of polyfunctional tertiary amine salt and free polyfunctional tertiary amine. The latter manner has more excellent effects.

The amine-reactive reactant is present in an organic solvent solution (2) immiscible with water, and has contents of about 0.005-5 wt%, preferably 0.01-0.5 wt%. Examples of the organic solvent include hexane, cyclohexane, heptane, alkanes having from 8 to 12 carbon atoms, and halogenated hydrocarbons, such as the FREON® series. ISOPAR® solvent used in the following examples is a mixture of alkanes having from 8 to 12 carbon atoms.

A method for producing the composite reverse osmosis membrane through interfacial-polymerization by a contact of an additional substance-containing aqueous polyfunctional amine solution (1) with an an amine reactive reactant-containing organic solvent solution (2) is as follows;

In one embodiment, the method as claimed in claim 12 comprises the steps of (i) coating a porous support with an additional substance-containing aqueous polyfunctional amine solution (1) to form a first liquid layer on said porous support, said addition substance being selected from the group consisting of a polyfunctional tertiary amine, a mixture of a polyfunctional tertiary amine salt and a free polyfunctional tertiary amine, a polar solvent and a polyfunctional tertiary amine, and a mixture of a polar solvent, a polyfunctional tertiary amine salt and a free polyfunctional tertiary amine; (ii) coating the coated support with an aqueous polyfunctional amine solution (1) to form a second liquid layer on said first liquid layer; (iii) contacting the twice-coated support with an organic solvent solution (2) comprising an amine-reactive reactant selected from the group consisting of a polyfunctional acyl halide, a polyfunctional sulfonyl halide, and a polyfunctional isocyanate, so as to interfacial-polymerize said amine-reactive reactant with said polyfunctional amine, thereby forming a cross-linked polyamide layer on the porous support; and (iv) washing the product with water after drying.

In another embodiment, the method as claimed in claim 13 comprises the steps of (i) coating a porous support with one or more polar solvents-containing aqueous polyfunctional amine solution (1) to form a first liquid layer on said support; (ii) coating the coated support with an aqueous polyfunctional amine solution (1) comprising a polyfunctional tertiary amine alone or a mixture of polyfunctional tertiary amine salt and free polyfunctional tertiary amine to form a second liquid layer on said first liquid layer; (iii) contacting the twice-coated porous support with an amine reactive reactant-containing organic solvent solution (2), so as to interfacial-polymerize said amine-reactive reactant with said polyfunctional amine, thereby forming a cross-linked polyamide layer on said porous support; and (iv) washing the product with water after drying.

A better understanding of the present invention may be obtained in light of the following examples which are set forth to illustrate, but are not to be construed to limit the present invention.

### EXAMPLE 1

A 140 µm thick microporous polysulfone support including the backing non-woven fabric was soaked in an aqueous solution containing 1.6 wt% of meta-phenylenediamine (MPD) and 0.6 wt% N,N,N',N'-tetramethyl-1,6-hexanediamine (TMHD) for 40 seconds and then excess solution is removed from the support by a roller. The support was dipped in 0.1 wt% solution of trimesoyl chloride (TMC) in Isopar® solvent (Exxon Corp.) for 1 minute followed by draining the excess organic solution off the support. The resulting composite membrane was air-dried for about 1 minute and then rinsed in 0.2 wt% Na₂CO₃ aqueous solution for 30 minutes at room temperature before the performance test. The performance of the reverse osmosis membrane was measured by passing an aqueous solution containing 2000 ppm of NaCl through the membrane at 1552.5 Pa (225 psi). As the result, the salt rejection was 96.8 % and the flux was 1.89612 m³/m²d (45.8 gfd).

### EXAMPLES 2-16 AND COMPARATIVE EXAMPLE A

The same procedure as set forth in Example 1 was carried out for each of Examples 2-16 and Comparative Example A, except that the concentrations of MPD and TMHD listed in Table 1 were used instead of those in Example 1.

**TABLE 1**

| Example | MPD (wt%) | TMHD (wt%) | Flux (gfd) m³/m²d | Rejection (%) | MPD/TMHD ratio |
|---|---|---|---|---|---|
| Comp.A | 1.0 | 0 | (17.8) 0.7 | 96.9 | - |
| 2 | 0.8 | 0.1 | (26.4) 1.09 | 95.9 | 8 |
| 3 | 1.0 | 0.05 | (20.6) 0.8 | 90.4 | 20 |
| 4 | 1.0 | 0.1 | (21.9) 0.9 | 95.8 | 10 |
| 5 | 1.0 | 0.15 | (27.2) 1.1 | 96.6 | 6.7 |
| 6 | 1.0 | 0.3 | (36.2) 1.5 | 98.1 | 3.3 |
| 7 | 1.0 | 0.5 | (55.3) 2.3 | 95.6 | 2.0 |
| 8 | 1.0 | 0.8 | (94.7) 3.9 | 63.5 | 1.25 |
| 9 | 1.6 | 0.2 | (25.1) 1.04 | 98.1 | 8 |
| 10 | 1.6 | 0.4 | (24.1) 0.99 | 97.6 | 4 |
| 11 | 1.6 | 0.7 | (49.9) 2.0 | 95.6 | 2.3 |
| 12 | 1.6 | 0.9 | (72.3) 2.9 | 79.0 | 1.78 |
| 13 | 2.0 | 0.3 | (18.1) 0.7 | 96.2 | 6.7 |
| 14 | 2.0 | 0.5 | (33.9) 1.4 | 97.5 | 4 |
| 15 | 2.0 | 0.8 | (39.9) 1.6 | 89.2 | 2.5 |
| 16 | 3.0 | 2.0 | (26.1) 1.08 | 96.4 | 1.5 |

### EXAMPLE 17

The same procedure as set forth in Example 1 was repeated, except that a mixture of 0.6 wt% TMHD and 0.06 wt% toluenesulfonic acid (TSA) was used instead of only 0.6 wt% TMHD. The flux and the salt rejection of the resultant membrane were 1.61 m³/m²d (38.9 gfd) and 97 %, respectively.

### EXAMPLES 18-25 AND COMPARATIVE EXAMPLES B-D

The same procedure as set forth in Example 1 was carried out for each of Examples 18-25 and Comparative Examples B-D, except that various concentrations of MPD, TMHD, acids (toluene sulfonic acid and acetic acid) and acetic anhydride as listed in Table 2, below, were used instead of those specified Example 1. The obtained composite reverse osmosis membrane was measured for its performance and the results are given in Table 2, below.

**TABLE 2**

| Example | MPD (wt%) | TMHD (wt%) | TSA (wt%) | AcOH (wt%) | Ac₂O (wt%) | Flux (gfd) | Rejection | |
|---|---|---|---|---|---|---|---|---|
| | | | | | | | m³/m²d | (%) |
| 18 | 1.0 | 0.4 | | | | (49.4) | 2.0 | 95.5 |
| 19 | 1.0 | 0.4 | | | 0.006 | (48.6) | 2.0 | 96.7 |
| 20 | 1.0 | 0.4 | | 0.006 | | (47.1) | 1.9 | 96.9 |
| 21 | 1.4 | 0.5 | | | | (44.0) | 1.8 | 96.9 |
| 22 | 1.4 | 0.5 | 0.05 | | | (34.9) | 1.4 | 97.5 |
| Comp.B | 1.6 | 1.0 | | | | (79.3) | 3.3 | 72.7 |
| 23 | 1.6 | 1.0 | 0.9 | | | (45.9) | 1.9 | 97.1 |
| Comp. C | 1.6 | 1.0 | 1.0 | | | (34.1) | 1.4 | 97.4 |
| Comp. D | 1.6 | 2.0 | 2.2 | | | (40.5) | 1.7 | 97.4 |

### EXAMPLE 24

The same procedure as set forth in Example 17 was repeated, except that 0.2 wt% 2-ethyl-1,3-hexanediol (EHD) was added to the aqueous solution containing MPD, TMHD and TSA. The flux and the salt rejection of the resultant membrane were 2.0 m³/m²d (48.7 gfd) and 96.6 %, repectively.

### EXAMPLES 25-37

The same procedure as set forth in Example 1 was repeated for each of Examples 25-37 except that various concentrations of MPD, TMHD, TSA, Ac2O and various organic solvents as listed in Table 3 were used. The obtained reverse osmosis membrane was measured for its performance and the results are given in Table 3, below. (in Table 3, "MEE" stands for 2-methoxyethylether; "BUT" stands for 1-butanol; "BE" stands for 2-butoxyethanol; "DEGEE" stands for diethyleneglycolethyl ether; "CYHEX" stands for cyclohexanone and "DMSO" stands for dimethylsulfoxide.)

**TABLE 3**

| Example | MPD (wt%) | TMHD (wt%) | TSA (wt%) | AcOH (wt%) | Organic Solvent (wt%) | Flux (gfd) | Rejection | |
|---|---|---|---|---|---|---|---|---|
| | | | | | | | m³/m²d | (%) |
| 25 | 1.6 | 0.4 | | | EHD (0.2) | (46.5) | 1.9 | 97.1 |
| 26 | 1.6 | 0.4 | | | MEE (1) | (45.0) | 1.8 | 95.7 |
| 27 | 1.6 | 0.4 | | | BUT (1) | (29.2) | 1.2 | 97.6 |
| 28 | 1.6 | 0.4 | | | BE (0.1) | (41.5) | 1.7 | 96.2 |
| 29 | 1.6 | 0.4 | | | DEGME (0.2) | (47.1) | 1.9 | 96.2 |
| 30 | 1.6 | 0.4 | | | DEGEE (0.2) | (47.5) | 1.9 | 97.0 |
| 31 | 1.6 | 0.4 | | | CYHEX (0.6) | (47.0) | 1.9 | 95.8 |
| 32 | 1.6 | 0.5 | | 0.05 | | (37.0) | 1.5 | 97.4 |
| 33 | 1.6 | 0.5 | | 0.05 | EHD (0.2) | (47.2) | 1.9 | 96.8 |
| 34 | 1.6 | 0.5 | | 0.05 | BE (1) | (43.5) | 1.8 | 97.0 |
| 35 | 1.6 | 0.5 | | 0.05 | DMSO (3) | (45.3) | 1.8 | 96.9 |
| 36 | 1.6 | 1 | 0.9 | | | (40.1) | 1.6 | 97.4 |
| 37 | 1.6 | 1 | 0.9 | | EHD (0.2) | (44.8) | 1.8 | 96.7 |

### EXAMPLE 38

The same procedure as set forth in Example 1 was repeated, except that 1.6 wt% of metaphenylenediamine (MPD) and 0.5 wt% of N,N,N',N'-tetramethyl-1,6-hexanediamine were employed instead of 1.6 wt% of metaphenylenediamine (MPD) and 0.6 wt% of N,N,N',N'-tetramethyl-1,6-hexanediamine. The flux and the salt rejection of the resultant membrane were 1.3 m³/m²d (32.4 gfd) and 96.9 %, respectively.

### EXAMPLES 39-47 AND COMPARATIVE EXAMPLES E-L

The same procedure as set fourth in Example 1 was repeated for each of Examples 39-47 and Comparative Examples E-L except that various concentrations of MPD, tertiary amines and various organic solvents as listed in Table 4 were used instead of 1.6 wt% metaphenylene diamine (MPD) and 0.6 wt% N, N,N',N'-tetramethyl-1,6-hexanediamine (TMHD). The obtained reverse osmosis membrane was measured for its performance and the results are presented in Table 4, below.

**TABLE 4**

| Example | MFD (wt%) | Other Tertiary Amine (wt%) | Organic Solvent (wt%) | Flux (gfd) | Rejection | |
|---|---|---|---|---|---|---|
| | | | | | m³/m²d | (%) |
| 39 | 1.6 | TMBD (0.3) | | (19.0) | 0.8 | 98.6 |
| 40 | 1.6 | TMBD (0.3) | EHD (0.3) | (26.3) | 1.0 | 96.7 |
| 41 | 1.6 | TMBD (0.3) | BE (1) | (28.0) | 1.15 | 96.0 |
| 42 | 1.6 | TMBD (0.3) | DMSO (3) | (46.3) | 1.9 | 96.6 |
| 43 | 1.6 | TMBD (0.5) | | (25.9) | 1.0 | 97.2 |
| 44 | 1.6 | TMPD (0.5) | | (35.9) | 1.5 | 95.8 |
| Comp. E | 1.6 | TMED (0.5) | | (20.9) | 0.8 | 93.7 |
| Comp. F | 1.6 | TMED (0.3) | EHD (0.3) | (28.4) | 1.17 | 92.4 |
| Comp. G | 1.6 | TEA (0.3) | | (14.9) | 0.6 | 96.3 |
| Comp. H | 1.6 | TEA (0.5) | | (16.8) | 0.7 | 94.5 |
| Comp. I | 1.6 | TEA (0.5) | EHD (0.2) | (27.4) | 1.13 | 96.5 |
| 45 | 1.6 | TMBD (0.5) | | (22.6) | 0.9 | 96.9 |
| 46 | 1.6 | TMBD (0.5) | EHD (0.2) | (31.6) | 1.3 | 97.4 |
| 47 | 1.6 | TMBD (0.5) | BE (1) | (30.0) | 1.2 | 97.1 |
| Comp. J | 1.6 | DMBA (0.5) | | (19.2) | 0.8 | 94.9 |
| Comp.K | 1.6 | DMBA (0.5) | EHD (0.2) | (32.9) | 1.3 | 95.3 |
| Comp. L | 1.6 | 1,4-DMP (0.3) | EHD (0.2) | (34.8) | 1.4 | 97.1 |

The Examples and Comparative Examples of Table 4 show that a combination of a polar solvent with a tertiary amine including monofunctional tertiary amines (TEA and DMBA) improves the membrane flux over membranes from tertiary amines without a polar solvent. However, none of Comparative Examples F (TMED), I (TEA), K (DMBA) and L (1,4-DMP) produces membrane flux as high as Example 25 (TMHD) in Table 3. TMED stands for N, N, N', N'-tetramethylethylenediamine. TEA stands for triethylamine. DMBA stands for dimethylbenzylamine. 1,4-DMP stands for 1,4-dimethylpiperazine.

Accordingly, thus prepared composite reverse osmosis membrane having high flux and excellent salt rejection can be used in industrial water-cleaning systems or home purifiers, useful in the desalination of brackish water or seawater.

## Claims

1. A composite polyamide reverse osmosis membrane comprising an interfacial-polymerization product of (i) an aqueous polyfunctional amine solution and (ii) an organic solvent solution comprising an amine-reactive reactant selected from the group consisting of a polyfunctional acyl halide, a polyfunctional sulfonyl halide and a polyfunctional isocyanate, on a porous support, said aqueous solution comprising a polyfunctional tertiary amine alone, or a mixture of a polyfunctional tertiary amine salt and a free polyfunctional tertiary amine resulting from the reaction of acid and polyfunctional tertiary amine in a molar ratio that is greater than 0:1 and less than 1:1, wherein the polyfunctional tertiary amine is selected from the group consisting of N,N,N'N'-tetramethyl-1,6-hexanediamine, N,N,N'N'-tetramethyl-1,4-butanediamine, N,N,N'N'-tetramethyl-2-butene-1,4-diamine, N,N,N'N'-tetramethyl-1,3-butanediamine, N,N,N'N'-tetramethyl-1,3-propanediamine, N,N,N'N'-tetramethyl-1,8-octanediamine, N,N,N'N'-tetramethyl-1,7-heptanediamine, N,N,N'N'-tetramethyl-1,5-pentanediamine, N,N,N'N'-tetraethyl-1,4-butanediamine, N,N,N'N'-tetraethyl-1,3-butanediamine, N,N,N'N'-tetraethyl-1,3-propanediamine, N,N,N'N'-tetraethylethylenediamine, N,N,N'N'-tetramethyl-1,n-cyclohexanediamine (wherein n is 2-4), and N,N,N'N'-tetramethyl-1,n-cyclohexanebis(methylamine) (wherein n is 2-4).

2. A composite polyamide reverse osmosis membrane as claimed in claim 1, wherein said aqueous solution comprises one or more polar solvents along with the polyfunctional tertiary amine alone or the mixture of the polyfunctional tertiary amine salt and the free polyfunctional tertiary amine resulting from the reaction of acid and polyfunctional tertiary amine in a molar ratio that is greater than 0:1 and less than 1:1.

3. The membrane as set forth in claim 1 or 2, wherein the polyfunctional tertiary amine is present in said aqueous solution in an amount constituting 0.05-6 wt% of said aqueous solution.

4. The membrane as set forth in claim 1 or 2, wherein the mixture of the polyfunctional tertiary amine salt and the free polyfunctional tertiary amine is present in said aqueous solution in an amount constituting 0.1-12 wt% of said aqueous solution.

5. The membrane as set forth in claim 1 or 2, wherein the polyfunctional amine has at least two primary or secondary amine functional groups.

6. The membrane as set forth in claim 2, wherein the polar solvent is selected from the group consisting of ethylene glycol derivatives, propylene glycol derivatives, 1,3-propanediol derivatives, sulfoxide derivatives, nitrile derivatives, ketone derivatives, urea derivatives and mixtures thereof.

7. The membrane as set forth in claim 2, wherein the polar solvent is present in said aqueous solution in an amount constituting 0.01-8 wt% of said aqueous solution.

8. The membrane as set forth in claim 1 or 2, wherein the acid is selected from the group consisting of aromatic sulfonic acid, aliphatic sulfonic acid, cycloaliphatic sulfonic acid, sulfuric acid, trifluoroacetic acid, nitric acid, hydrochloric acid, phosphoric acid, alkyl phosphoric acid, aryl phosphoric acid, carboxylic acid and mixtures thereof.

9. The membrane as set forth in claim 1 or 2, wherein said acid is replaced with an acid anhydride.

10. The membrane as set forth in claim 9, wherein the acid anhydride is selected from the group consisting of acetic anhydride, propionic anhydride, butyric anhydride, hexanoic anhydride, benzoic anhydride, sulfonic anhydride and mixtures thereof.

11. The membrane as set forth in claim 9, wherein the acid anhydride and the polyfunctional tertiary amine are mixed in a molar ratio that is greater than 0:1 and less than 0.5:1.

12. A method for producing a composite polyamide reverse osmosis membrane, comprising the steps of;
coating a porous support with an additional substance-containing aqueous polyfunctional amine solution to form a first liquid layer on said porous support, said additional substance being selected from the group consisting of a polyfunctional tertiary amine, a mixture of a polyfunctional tertiary amine salt and a free polyfunctional tertiary amine, a polar solvent and a polyfunctional tertiary amine, and a mixture of a polar solvent, a polyfunctional tertiary amine salt and a free polyfunctional tertiary amine, wherein the mixture of the polyfunctional tertiary amine salt and the free polyfunctional tertiary amine is obtained by mixing an acid or an acid anhydride with the polyfunctional tertiary amine in a molar ratio that is greater than 0:1 and less than 1:1 and wherein the polyfunctional tertiary amine is selected from the group consisting of N,N,N'N'-tetramethyl-1,6-hexanediamine, N,N,N'N'-tetramethyl-1,4-butanediamine, N,N,N'N'-tetramethyl-2-butene-1,4-diamine, N,N,N'N'-tetramethyl-1,3-butanediamine, N,N,N'N'-tetramethyl-1,3-propanediamine, N,N,N'N'-tetramethyl-1,8-octanediamine, N,N,N'N'-tetramethyl-1,7-heptanediamine, N,N,N'N'-tetramethyl-1,5-pentanediamine, N,N,N'N'-tetraethyl-1,4-butanediamine, N,N,N'N'-tetraethyl-1,3-butanediamine, N,N,N'N'-tetraethyl-1,3-propanediamine, N,N,N'N'-tetraethylethylenediamine, N,N,N'N'-tetramethyl-1,n-cyclohexanediamine (wherein n is 2-4), and N,N,N'N'-tetramethyl-1,n-cyclohexanebis(methylamine) (wherein n is 2-4);
coating the coated support with an aqueous polyfunctional amine solution to form a second liquid layer on said first liquid layer;
contacting the twice-coated support with an organic solvent solution comprising an amine-reactive reactant selected from the group consisting of a polyfunctional acyl halide, a polyfunctional sulfonyl halide and a polyfunctional isocyanate, so as to interfacial-polymerize said amine-reactive reactant with said polyfunctional amine, thereby forming a cross-linked polyamide layer on said porous support; and
washing the product with water after drying.

13. A method for producing a composite polyamide reverse osmosis membrane, comprising the steps of;
coating a porous support with one or more polar solvents-containing aqueous polyfunctional amine solution to from a first liquid layer on said porous support;
coating the coated support with an aqueous polyfunctional amine solution to form a second liquid layer on said first liquid layer, said aqueous polyfunctional amine solution comprising a polyfunctional tertiary amine alone, or a mixture of a polyfunctional tertiary amine salt and a free polyfunctional tertiary amine, wherein the mixture of the polyfunctional tertiary amine salt and the free polyfunctional tertiary amine is obtained by mixing an acid or an acid anhydride with the polyfunctional tertiary amine in a molar ratio that is greater than 0:1 and less than 1:1 and wherein the polyfunctional tertiary amine is selected from the group consisting of N,N,N'N'-tetramethyl-1,6-hexanediamine, N,N,N'N'-tetramethyl-1,4-butanediamine, N,N,N'N'-tetramethyl-2-butene-1,4-diamine, N,N,N'N'-tetramethyl-1,3-butanediamine, N,N,N'N'-tetramethyl-1,3-propanediamine, N,N,N'N'-tetramethyl-1,8-octanediamine, N,N,N'N'-tetramethyl-1,7-heptanediamine, N,N,N'N'-tetramethyl-1,5-pentanediamine, N,N,N'N'-tetraethyl-1,4-butanediamine, N,N,NN'-tetraethyl-1,3-butanediamine, N,N,N'N'-tetraethyl-1,3-propanediamine, N,N,N'N'-tetraethylethylenediamine, N,N,N'N'-tetramethyl-1,n-cyclohexanediamine (wherein n is 2-4), and N,N,N'N'-tetramethyl-1,n-cyclohexanebis(methylamine) (wherein n is 2-4);
contacting the twice-coated support with an organic solvent solution comprising an amine-reactice reactant selected from the group consisting of a polyfunctional acyl halide, a polyfunctional sulfonyl halide and a polyfunctional isocyanate, so as to interfacial-polymerize said amine-reactive reactant with said polyfunctional amine, thereby forming a cross-linked polyamide layer on said porous support; and
washing the product with water after drying.

## Patentansprüche

1. Verbund-Polyamid-Umkehrosmose-Membran, umfassend ein Grenzflächenpolymerisationsprodukt aus (i) einer wässerigen mehrfunktionellen Aminlösung und (ii) einer organischen Lösungsmittellösung, umfassend einen amin-reaktiven Reaktanden, ausgewählt aus der Gruppe, bestehend aus einem mehrfunktionellen Acylhalogenid, einem mehrfunktionellen Sulfonylhalogenid und einem mehrfunktionellen Isocyanat, auf einem porösen Träger, wobei die wässerige Lösung einzig ein mehrfunktionelles tertiäres Amin umfasst oder eine Mischung eines mehrfunktionellen tertiären Aminsalzes und einem freien mehrfunktionellen tertiären Amin, entstanden aus der Reaktion einer Säure und einem mehrfunktionellem tertiären Amin in einem Molverhältnis, das größer als 0:1 und kleiner als 1:1 ist, wobei das mehrfunktionelle tertiäre Amin ausgewählt ist aus der Gruppe, bestehend aus N,N,N,N'-Tetramethyl-1,6-hexandiamin, N,N,N,N'-Tetramethyl-1,4-butandiamin, N,N,N,N'-Tetramethyl-2-buten-1,4-diamin, N,N,N,N'-Tetramethyl-1,3-butandiamin, N,N,N,N'-Tetrametyl-1,3-propandiamin, N,N,N,N'-Tetramethyl-1,8-octandiamin, N,N,N,N'-Tetramethyl-1,7-heptandiamin, N,N,N,N'-Tetramethyl-1,5-pentandiamin, N,N,N,N'-Tetraethyl-1,4-butandiamin, N,N,N,N'-Tetraethyl-1,3-butandiamin, N,N,N,N'-Tetraethyl-1,3-propandiamin, N,N,N,N'-Tetraethylethylendiamin, N,N,N,N'-Tetramethyl-1,n-cyclohexandiamin (worin n 2-4 ist), und N,N,N,N'-Tetramethyl-1,n-cyclohexanbis(methylamin) (worin n 2-4 ist).

2. Verbund-Polyamid-Umkehrosmose-Membran gemäß Anspruch 1, wobei die wässerige Lösung ein oder mehrere polare Lösungsmittel zusammen mit dem mehrfunktionellen tertiären Amin allein oder der Mischung des mehrfunktionellen tertiären Aminsalzes und dem freien mehrfunktionellen tertiären Amin, entstanden aus der Reaktion einer Säure und einem mehrfunktionellem tertiären Amin in einem Molverhältnis größer als 0:1 und kleiner als 1:1, umfasst.

3. Membran gemäß Anspruch 1 oder 2, wobei das mehrfunktionelle tertiäre Amin in der wässerigen Lösung in einer Menge, die 0,05-6 Gew.-% der wässerigen Lösung darstellt, vorliegt.

4. Membran gemäß Anspruch 1 oder 2, wobei die Mischung des mehrfunktionellen tertiären Aminsalzes und des freien mehrfunktionellen tertiären Amins in der wässerigen Lösung in einer Menge, die 0,1-12 Gew.-% der wässerigen Lösung darstellt, vorliegt.

5. Membran gemäß 1 oder 2, wobei das mehrfunktionelle tertiäre Amin mindestens zwei primäre oder sekundäre Aminogruppen aufweist.

6. Membran gemäß Anspruch 2, wobei das polare Lösungsmittel ausgewählt ist aus der Gruppe, bestehend aus Ethylenglykol-Derivaten, Propylenglykol-Derivaten, 1,3-Propandiol-Derivaten, Sulfoxid-Derivaten, Nitril-Derivaten, Keton-Derivaten, Harnstoff-Derivaten und Mischungen davon.

7. Membran gemäß Anspruch 2, wobei das polare Lösungsmittel in der wässerigen Lösung in einer Menge, die 0,01-8 Gew.-% der wässerigen Lösung darstellt, vorliegt.

8. Membran gemäß Anspruch 1 oder 2, wobei die Säure ausgewählt ist aus der Gruppe, bestehend aus aromatischer Sulfonsäure, aliphatischer Sulfonsäure, cycloaliphatischer Sulfonsäure, Schwefelsäure, Trifluoressigsäure, Salpetersäure, Salzsäure, Phosphorsäure, Alkylphosphorsäure, Arylphosphorsäure, Carbonsäure und Mischungen davon.

9. Membran gemäß Anspruch 1 oder 2, wobei die Säure durch ein Säureanhydrid ersetzt ist.

10. Membran gemäß Anspruch 9, wobei das Säureanhydrid ausgewählt ist aus der Gruppe, bestehend aus Acetanhydrid, Propionsäureanhydrid, Buttersäureanhydrid, Capronsäureanhydrid, Benzoesäureanhydrid, Sulfonsäureanhydrid und Mischungen davon.

11. Membran gemäß Anspruch 9, wobei das Säureanhydrid und das mehrfunktionelle tertiäre Amin in einem Molverhältnis größer als 0:1 und kleiner als 0,5:1 gemischt sind.

12. Verfahren zur Herstellung einer Verbund-Polyamid-Umkehrosmose-Membran, umfassend die Stufen:
beschichten eines porösen Trägers mit einer zusätzlichen Substanz-enthaltenden wässerigen, mehrfunktionellen Aminlösung, um eine erste Flüssigkeitsschicht auf dem porösen Träger zu bilden, wobei die zusätzliche Substanz ausgewählt ist aus der Gruppe, bestehend aus einem mehrfunktionellen tertiären Amin, einer Mischung eines mehrfunktionellen tertiären Aminsalzes und einem freien mehrfunktionellen tertiären Amin, einem polaren Lösungsmittel und einem mehrfunktionellen tertiären Amin, und einer Mischung eines polaren Lösungsmittels, eines mehrfunktionellen tertiären Amins und eines freien mehrfunktionellen tertiären Amins, wobei die Mischung des mehrfunktionellen tertiären Aminsalzes und des freien mehrfunktionalen tertiären Amins erhalten wird durch Mischen einer Säure oder eines Säureanhydrids mit dem mehrfunktionellen tertiären Amin in einem Molverhältnis größer als 0:1 und kleiner als 1:1 und wobei das mehrfunktionelle tertiäre Amin ausgewählt ist aus der Gruppe, bestehend aus N,N,N,N'-Tetramethyl-1,6-hexandiamin, N,N,N,N'-Tetramethyl-1,4-butandiamin, N,N,N,N'-Tetrametyl-2-buten-1,4-diamin, N,N,N,N-Tetramethyl-1,3-butandiamin, N,N,N,N'-Tetramethyl-1,3-propandiamin, N,N,N,N'-Tetramethyl-1,8-octandiamin, N,N,N,N'-Tetramethyl-1,7-heptandiamin, N,N,N,N-Tetramethyl-1,5-pentandiamin, N,N,N,N'-Tetraethyl-1,4-butandiamin, N,N,N,N-Tetraethyl-1,3-butandiamin, N,N,N,N'-Tetraethyl-1,3-propandiamin, N,N,N,N'-Tetraethylethylendiamin, N,N,N,N'-Tetramethyl-1,n-cyclohexandiamin (worin n 2-4 ist), und N,N,N,N'-Tetramethyl1,n-cyclohexanbis(methylamin) (worin n 2-4 ist);
beschichten des beschichteten Trägers mit einer wässerigen, mehrfunktionellen Aminlösung, um eine zweite Flüssigkeitsschicht auf der ersten Flüssigkeitsschicht zu bilden;
kontaktieren des zweifach beschichteten Trägers mit einer organischen Lösungsmittellösung, umfassend einen amin-reaktiven Reaktanden, ausgewählt aus der Gruppe, bestehend aus einem mehrfunktionellen Acylhalogenid, einem mehrfunktionellen Sulfonylhalogenid und einem mehrfunktionellen Isocyanat, um so den amin-reaktiven Reaktanden mit dem mehrfunktionalen Amin grenzflächig zu polymerisieren, um dadurch eine vernetzte Polyamidschicht auf dem porösen Träger zu bilden; und
waschen des Produkts mit Wasser nach dem Trocknen.

13. Verfahren zur Herstellung einer Verbund-Polyamid-Umkehrosmose-Membran, umfassend die Stufen von;
beschichten eines porösen Trägers mit einer oder mehrere polare Lösungsmittel enthaltenden wässerigen, mehrfunktionellen Aminlösung, um eine erste Flüssigkeitsschicht auf dem porösen Träger zu bilden;
beschichten des beschichteten Trägers mit einer wässerigen, mehrfunktionellen Aminlösung, um eine zweite Flüssigkeitsschicht auf der ersten Flüssigkeitsschicht zu bilden, wobei die wässerige, mehrfunktionale Aminlösung ein mehrfunktionelles tertiäres Amin allein, oder eine Mischung eines mehrfunktionellen tertiären Aminsalzes und eines freien mehrfunktionellen tertiären Amins umfasst, wobei die Mischung des mehrfunktionellen tertiären Aminsalzes und des freien mehrfunktionalen tertiären Amins erhalten wird durch Mischen einer Säure oder eines Säureanhydrids mit dem mehrfunktionellen tertiären Amin in einem Molverhältnis größer als 0:1 und kleiner als 1:1 und wobei das mehrfunktionelle tertiäre Amin ausgewählt ist aus der Gruppe, bestehend aus N,N,N,N'-Tetramethyl-1,6-hexandiamin, N,N,N,N'-Tetramethyl-1,4-butandiamin, N,N,N,N'-Tetrametyl-2-buten-1,4-diamin, N,N,N,N'-Tetramethyl-1,3-butandiamin, N,N,N,N'-Tetramethyl-1,3-propandiamin, N,N,N,N'-Tetramethyl-1,8-octandiamin, N,N,N,N'-Tetramethyl-1,7-heptandiamin, N,N,N,N'-Tetramethyl-1,5-pentandiamin, N,N,N,N'-Tetraethyl-1,4-butandiamin, N,N,N,N'-Tetraethyl-1,3-butandiamin, N,N,N,N'-Tetraethyl-1,3-propandiamin, N,N,N,N'-Tetraethylethylendiamin, N,N,N,N'-Tetramethyl-1,n-cyclohexandiamin (worin n 2-4 ist), und N,N,N,N'-Tetramethyl-1,n-cyclohexanbis(methylamin) (worin n 2-4 ist);
kontaktieren des zweifach beschichteten Trägers mit einer organischen Lösungsmittellösung, umfassend einen amin-reaktiven Reaktanden, ausgewählt aus der Gruppe, bestehend aus einem mehrfunktionellen Acylhalogenid, einem mehrfunktionellen Sulfonylhalogenid und einem mehrfunktionellen Isocyanat, um so den amin-reaktiven Reaktanden mit dem mehrfunktionalen Amin grenzflächig zu polymerisieren, um dadurch eine vemetzte Polyamidschicht auf dem porösen Träger zu bilden; und
waschen des Produkts mit Wasser nach dem Trocknen.

## Revendications

1. Membrane d'osmose inverse en polyamide composite comprenant un produit de polymérisation à l'interface de (i) une solution aqueuse d'amine polyfonctionnelle et (ii) une solution de solvant organique comprenant un réactif réagissant avec l'amine, choisi dans le groupe constitué par un halogénure d'acyle polyfonctionnel, un halogénure de sulfonyle polyfonctionnel et un isocyanate polyfonctionnel, sur un support poreux, ladite solution aqueuse comprenant une amine tertiaire polyfonctionnelle seule, ou un mélange d'un sel d'amine tertiaire polyfonctionnelle et d'une amine tertiaire polyfonctionnelle libre résultant de la réaction d'un acide et d'une amine tertiaire polyfonctionnelle libre en un rapport molaire supérieur à 0/1 et inférieur à 1/1, dans laquelle l'amine tertiaire polyfonctionnelle est choisie dans le groupe constitué par la N,N,N',N'-tétraméthyl-1,6-hexanediamine, la N,N,N',N'-tétraméthyl-1,4-butanediamine, la N,N,N',N'-tétraméthyl-2-butène-1,4-diamine, la N,N,N',N'-tétraméthyl-1,3-butanediamine, la N,N,N',N'-tétraméthyl-1,3-propanediamine, la N,N,N',N'-tétraméthyl-1,8-octanediamine, la N,N,N',N'-tétraméthyl-1,7-heptanediamine, la N,N,N',N'-tétraméthyl-1,5-pentanediamine, la N,N,N',N'-tétraéthyl-1,4-butanediamine, la N,N,N',N'-tétraéthyl-1,3-butanediamine, la N,N,N',N'-tétraéthyl-1,3-propanediamine, la N,N,N',N'-tétraéthyléthylènediamine, la N,N,N',N'-tétraméthyl-1,n-cyclohexanediamine (où n vaut 2-4), et la N,N,N',N'-tétraméthyl-1,n-cyclohexanebis(méthylamine) (où n vaut 2-4).

2. Membrane d'osmose inverse en polyamide composite selon la revendication 1, dans laquelle ladite solution aqueuse comprend un ou plusieurs solvants polaires conjointement avec l'amine tertiaire polyfonctionnelle seule ou le mélange du sel d'amine tertiaire polyfonctionnelle et de l'amine tertiaire polyfonctionnelle libre en un rapport molaire supérieur à 0/1 et inférieur à 1/1.

3. Membrane selon la revendication 1 ou 2, dans laquelle l'amine tertiaire polyfonctionnelle est présente dans ladite solution aqueuse en une quantité représentant 0,05 à 6 % en poids de ladite solution aqueuse.

4. Membrane selon la revendication 1 ou 2, dans laquelle le mélange du sel d'amine tertiaire polyfonctionnelle et de l'amine tertiaire polyfonctionnelle libre est présent dans ladite solution aqueuse en une quantité représentant 0,1 à 12 % en poids de ladite solution aqueuse.

5. Membrane selon la revendication 1 ou 2, dans laquelle l'amine polyfonctionnelle a au moins deux groupes fonctionnels amine primaire ou secondaire.

6. Membrane selon la revendication 2, dans laquelle le solvant polaire est choisi dans le groupe constitué par les dérivés d'éthylèneglycol, les dérivés de propylèneglycol, les dérivés de 1,3-propanediol, les dérivés de sulfoxyde, les dérivés de nitrile, les dérivés de cétone, les dérivés d'urée et leurs mélanges.

7. Membrane selon la revendication 2, dans laquelle le solvant polaire est présent dans ladite solution aqueuse en une quantité représentant 0,01 à 8 % en poids de ladite solution aqueuse.

8. Membrane selon la revendication 1 ou 2, dans laquelle l'acide est choisi dans le groupe constitué par un acide sulfonique aromatique, un acide sulfonique aliphatique, un acide sulfonique cycloaliphatique, l'acide sulfurique, l'acide trifluoroacétique, l'acide nitrique, l'acide chlorhydrique, l'acide phosphorique, un acide alkylphosphorique, un acide arylphosphorique, un acide carboxylique et leurs mélanges.

9. Membrane selon la revendication 1 ou 2, dans laquelle ledit acide est remplacé par un anhydride d'acide.

10. Membrane selon la revendication 9, dans laquelle l'anhydride d'acide est choisi dans le groupe constitué par l'anhydride acétique, l'anhydride propionique, l'anhydride butyrique, l'anhydride hexanoïque, l'anhydride benzoïque, l'anhydride sulfonique et leurs mélanges.

11. Membrane selon la revendication 9, dans laquelle l'anhydride d'acide et l'amine tertiaire polyfonctionnelle sont mélangés en un rapport molaire supérieur à 0/1 et inférieur à 0,5/1.

12. Procédé pour produire une membrane d'osmose inverse en polyamide composite, comprenant les étapes consistant à :
revêtir un support poreux avec une solution aqueuse d'amine polyfonctionnelle contenant une substance additionnelle pour former une première couche de liquide sur ledit support poreux, ladite substance additionnelle étant choisie dans le groupe constitué par une amine tertiaire polyfonctionnelle, un mélange d'un sel d'amine tertiaire polyfonctionnelle et d'une amine tertiaire polyfonctionnelle libre, un solvant polaire et une amine tertiaire polyfonctionnelle, et un mélange d'un solvant polaire, d'un sel d'amine tertiaire polyfonctionnelle et d'une amine tertiaire polyfonctionnel libre, où le mélange du sel d'amine tertiaire polyfonctionnelle et de l'amine tertiaire polyfonctionnelle libre est obtenu par mélange d'un acide ou d'un anhydride d'acide avec l'amine tertiaire polyfonctionnelle en un rapport molaire supérieur à 0/1 et inférieur à 1/1, et où l'amine tertiaire polyfonctionnelle est choisie dans le groupe constitué par la N,N,N',N'-tétraméthyl-1,6-hexanediamine, la N,N,N',N'-tétraméthyl-1,4-butanediamine, la N,N,N',N'-tétraméthyl-2-butène-1,4-diamine, la N,N,N',N'-tétraméthyl-1,3-butanediamine, la N,N,N',N'-tétraméthyl-1,3-propanediamine, la N,N,N',N'-tétraméthyl-1,8-octanediamine, la N,N,N',N'-tétraméthyl-1,7-heptanediamine, la N,N,N',N'-tétraméthyl-1,5-pentanediamine, la N,N,N',N'-tétraéthyl-1,4-butanediamine, la N,N,N',N'-tétraéthyl-1,3-butanediamine, la N,N,N',N'-tétraéthyl-1,3-propanediamine, la N,N,N',N'-tétraéthyléthylènediamine, la N,N,N',N'-tétraméthyl-1,n-cyclohexanediamine (où n vaut 2-4), et la N,N,N',N'-tétraméthyl-1,n-cyclohexanebis(méthylamine) (où n vaut 2-4) ;
revêtir le support revêtu avec une solution aqueuse d'amine polyfonctionnelle pour former une deuxième couche de liquide sur ladite première couche de liquide ;
mettre en contact le support deux fois revêtu avec une solution de solvant organique comprenant un réactif réagissant avec l'amine, choisi dans le groupe constitué par un halogénure d'acyle polyfonctionnel, un halogénure de sulfonyle polyfonctionnel et un isocyanate polyfonctionnel, de façon à polymériser à l'interface ledit réactif réagissant avec l'amine avec ladite amine polyfonctionnelle, en formant ainsi une couche de polyamide réticulé sur ledit support poreux ; et
laver le produit à l'eau après séchage.

13. Procédé pour produire une membrane d'osmose inverse en polyamide composite, comprenant les étapes consistant à :
revêtir un support poreux avec une solution aqueuse d'amine polyfonctionnelle contenant un ou plusieurs solvants polaires pour former une première couche de liquide sur ledit support poreux ;
revêtir le support revêtu avec une solution aqueuse d'amine polyfonctionnelle pour former une deuxième couche de liquide sur ladite première couche de liquide, ladite solution aqueuse d'amine polyfonctionnelle comprenant une amine tertiaire polyfonctionnelle seule, ou un mélange d'un sel d'amine tertiaire polyfonctionnelle et d'une amine tertiaire polyfonctionnelle libre, où le mélange du sel d'amine tertiaire polyfonctionnelle et de l'amine tertiaire polyfonctionnelle libre est obtenu par mélange d'un acide ou d'un anhydride d'acide avec l'amine tertiaire polyfonctionnelle en un rapport molaire supérieur à 0/1 et inférieur à 1/1, et où l'amine tertiaire polyfonctionnelle est choisie dans le groupe constitué par la N,N,N',N'-tétraméthyl-1,6-hexanediamine, la N,N,N',N'-tétraméthyl-1,4-butanediamine, la N,N,N',N'-tétraméthyl-2-butène-1,4-diamine, la N,N,N',N'-tétraméthyl-1,3-butanediamine, la N,N,N',N'-tétraméthyl-1,3-propanediamine, la N,N,N',N'-tétraméthyl-1,8-octanediamine, la N,N,N',N'-tétraméthyl-1,7-heptanediamine, la N,N,N',N'-tétraméthyl-1,5-pentanediamine, la N,N,N',N'-tétraéthyl-1,4-butanediamine, la N,N,N',N'-tétraéthyl-1,3-butanediamine, la N,N,N',N'-tétraéthyl-1,3-propanediamine, la N,N,N',N'-tétraéthyléthylènediamine, la N,N,N',N'-tétraméthyl-1,n-cyclohexanediamine (où n vaut 2-4), et la N,N,N',N'-tétraméthyl-1,n-cyclohexanebis(méthylamine) (où n vaut 2-4) ;
mettre en contact le support deux fois revêtu avec une solution de solvant organique comprenant un réactif réagissant avec l'amine, choisi dans le groupe constitué par un halogénure d'acyle polyfonctionnel, un halogénure de sulfonyle polyfonctionnel et un isocyanate polyfonctionnel, de façon à polymériser à l'interface ledit réactif réagissant avec l'amine avec ladite amine polyfonctionnelle, en formant ainsi une couche de polyamide réticulé sur ledit support poreux ; et
laver le produit à l'eau après séchage.
